# FASCICULE DE BREVET EUROPEEN

(11) **EP 0 726 408 B1**
(45) Date de publication et mention de la délivrance du brevet: **07.01.1999**
(21) Numéro de dépôt: 96400273.7
(22) Date de dépôt: 09.02.1996
(51) Int. Cl.: F16F 13/14

(54) **Manchon antivibratoire hydraulique et son procédé de fabrication**
Vibrationsdämpfende hydraulische Stütze und deren Herstellungsverfahren
Antivibratory hydraulic support and its manufacturing process

(30) Priorité: 13.02.1995 FR 9501625
(43) Date de publication de la demande: 14.08.1996
(73) Titulaire: HUTCHINSON, F-75008 Paris (FR)
(72) Inventeur: Brunerye, Philippe, F-92400 Courbevoie (FR)
(74) Mandataire: Burbaud, Eric

(56) Documents cités:
- EP-A- 0 370 524
- EP-A- 0 556 076
- DE-A- 3 831 644
- DE-A- 4 305 808
- FR-A- 2 593 255

## Description

L'invention est relative aux manchons antivibratoires hydrauliques et à leurs procédés de fabrication.

Plus particulièrement, l'invention concerne un manchon antivibratoire comportant deux armatures rigides tubulaires s'entourant l'une l'autre, savoir une armature intérieure et une armature extérieure qui présentent des axes longitudinaux parallèles à une même direction axiale et qui sont reliées entre elles par un corps en élastomère, ce manchon antivibratoire comportant en outre au moins deux poches étanches délimitées entièrement par le corps en élastomère et les deux armatures, ces poches étanches étant disposées entre les deux armatures et communiquant entre elles par au moins un canal étroit, l'ensemble des deux poches et du canal étroit étant rempli par un liquide, le corps en élastomère s'étendant axialement entre des première et deuxième extrémités, le corps en élastomère comportant une partie annulaire intérieure qui est moulée sur et adhérisée à l'armature intérieure et une partie annulaire extérieure qui est en contact avec l'armature extérieure, et le corps en élastomère comportant en outre au moins deux parties pleines qui séparent les poches angulairement les unes des autres.

Un exemple d'un tel manchon antivibratoire hydraulique est donné dans le document EP-A-0 359 655.

Les manchons antivibratoires hydrauliques du genre en question présentent l'inconvénient de nécessiter des moules complexes comportant deux coquilles à mouvement radial et deux parties à mouvement axial. Il en résulte d'une part un coût de moulage élevé et d'autre part une productivité limitée par le faible nombre d'empreintes qu'il est possible de prévoir dans un même moule.

Par ailleurs, les manchons antivibratoires hydrauliques du genre en question comportent une cage métallique ajourée sur laquelle est moulée et adhérisée la partie annulaire extérieure du corps en élastomère, l'armature tubulaire extérieure étant rapportée autour de cette cage ajourée après moulage du corps en élastomère.

La cage ajourée est une pièce métallique de forme relativement complexe, donc coûteuse, et elle alourdit en outre le manchon antivibratoire hydraulique.

La présente invention a notamment pour but de pallier ces inconvénients.

A cet effet, selon l'invention, un manchon antivibratoire hydraulique du genre en question est essentiellement caractérisé en ce que :
. la partie annulaire extérieure du corps en élastomère est moulée sur l'armature extérieure et adhérisée à cette armature, chaque poche étanche étant constituée par un évidement borgne formé à l'intérieur du corps en élastomère, qui débouche à la première extrémité de ce corps en élastomère et qui s'étend axialement à l'intérieur du corps en élastomère depuis cette première extrémité vers la deuxième extrémité dudit corps en élastomère, cet évidement étant délimité axialement vers la deuxième extrémité du corps en élastomère par une paroi mince qui appartient audit corps en élastomère et qui s'étend continûment entre les parties annulaires intérieure et extérieure de ce corps en élastomère,
. la partie annulaire intérieure du corps en élastomère se prolonge périphériquement au voisinage de la première extrémité dudit corps en élastomère par une collerette mince en élastomère qui s'étend sensiblement radialement jusqu'à un bord périphérique et qui présente une face intérieure en regard des poches étanches et une face extérieure à l'opposé des poches étanches,
. l'armature extérieure comporte, au voisinage de la première extrémité du corps en élastomère, une extrémité axiale formant un collet qui prolonge périphériquement cette armature vers l'extérieur et qui présente une face de contact en regard de la collerette en élastomère,
. et la face intérieure de la collerette en élastomère est solidarisée périphériquement de façon étanche, au niveau du bord périphérique de cette collerette, avec la face de contact du collet de l'armature extérieure en fermant ainsi de façon étanche les deux poches et le canal étroit, lequel est délimité d'une part par la collerette en élastomère et d'autre part par une des parties pleines du corps en élastomère qui séparent angulairement les poches.

Ainsi, le corps en élastomère peut être moulé simplement au moyen d'un moule à deux parties mobiles axialement l'une par rapport à l'autre, la collerette en élastomère étant moulée en contre-dépouille et étant temporairement rabattue en jupe parallèlement à la direction axiale lors du démoulage du corps en élastomère.

L'invention permet donc d'utiliser un moule plus simple et moins couteux que les moules de l'art antérieur.

De plus, du fait de sa simplicité, ce moule peut comporter un grand nombre d'empreintes, ce qui permet d'augmenter notablement la productivité lors de la fabrication des manchons antivibratoires hydrauliques selon l'invention.

Par ailleurs, du fait que l'armature tubulaire extérieure n'est plus une pièce rapportée à l'extérieur du corps en élastomère après moulage, mais une pièce solidarisée avec le corps en élastomère dès le moulage, il n'est plus nécessaire d'utiliser une cage métallique ajourée pour renforcer la partie annulaire extérieure du corps en élastomère, ce qui permet de diminuer à la fois le poids et le coût du manchon antivibratoire hydraulique selon l'invention.

Dans des modes de réalisation préférés du manchon antivibratoire hydraulique défini ci-dessus, on a recours en outre à l'une et/ou à l'autre des dispositions suivantes :
- le bord périphérique de la collerette en élastomère est serré axialement entre la face de contact du collet de l'armature extérieure et une rondelle rigide, le collet de l'armature extérieure présentant des portions rabattues par dessus la rondelle rigide pour sertir cette rondelle ;
- la face intérieure de la collerette en élastomère s'étend sensiblement radialement vers l'extérieur à partir d'une zone circulaire qui présente un rayon R0 et la face extérieure de la collerette en élastomère s'étend sensiblement radialement vers l'extérieur à partir d'une zone circulaire qui présente un rayon R1 inférieur au rayon R0 ;
- la collerette en élastomère présente une épaisseur au plus égale à la différence R0 - R1 ;
- la collerette en élastomère présente une portion radialement intérieure formant sensiblement un tronc de cône qui diverge vers la première extrémité du corps en élastomère et qui présente un demi-angle au sommet compris entre 70 et 90 degrés ;
- le bord périphérique de la collerette en élastomère n'est pas dilaté radialement ;
- chaque paroi mince du corps en élastomère, qui délimite axialement une poche étanche vers la deuxième extrémité dudit corps en élastomère, présente sensiblement la forme d'une portion de tronc de cône qui diverge vers la deuxième extrémité du corps en élastomère.

L'invention a également pour objet un procédé de fabrication d'un manchon antivibratoire hydraulique tel que défini ci-dessus, caractérisé en ce qu'il comporte une étape de moulage du corps en élastomère sur les deux armatures tubulaires au moyen d'un moule constitué par deux parties déplaçables en translation l'une par rapport à l'autre parallèlement à la direction axiale, dites respectivement première et deuxième parties, la première partie de moule présentant une surface de joint où débouche une empreinte cylindrique creuse qui reçoit au moins l'armature extérieure, la deuxième partie de moule présentant également une surface de joint disposée en regard de la surface de joint de la première partie de moule, une empreinte centrale creuse débouchant axialement dans la surface de joint de la deuxième partie de moule en regard de l'empreinte de la première partie de moule, un évidement annulaire étant creusé sensiblement radialement vers l'extérieur à partir de l'empreinte centrale de la deuxième partie de moule pour former en contre-dépouille la collerette en élastomère, et la deuxième partie de moule comportant en outre au moins deux doigts qui saillent axialement vers l'empreinte de la première partie de moule et qui pénètrent dans cette empreinte lorsque les deux parties de moule sont rapprochées l'une de l'autre, ces deux doigts étant alors disposés entre les armatures intérieure et extérieure pour former les poches étanches du corps en élastomère.

Dans des modes de réalisation préférés du procédé selon l'invention, on a recours en outre à l'une et/ou l'autre des dispositions suivantes :
- l'évidement annulaire qui forme la collerette en élastomère présente dans sa totalité une forme de tronc de cône qui diverge en s'éloignant de la première partie de moule et qui présente un demi-angle au sommet compris entre 70 et 90 degrés ;
- le procédé comporte en outre une étape consistant à rabattre la collerette en élastomère contre la face de contact du collet de l'armature extérieure puis à solidariser périphériquement de façon étanche le collet avec la collerette en élastomère, sans dilater radialement le bord périphérique de cette collerette.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue en coupe d'un manchon antivibratoire hydraulique selon une forme de réalisation de l'invention, la coupe étant prise selon la ligne I-I de la figure 2,
- la figure 2 est une vue en coupe du manchon de la figure 1, la coupe étant prise selon la ligne II-II de la figure 1,
- et la figure 3 est une vue en coupe similaire à la figure 2, pendant le démoulage du corps en élastomère du manchon antivibratoire hydraulique.

Sur les dessins, les mêmes références désignent des éléments identiques ou similaires.

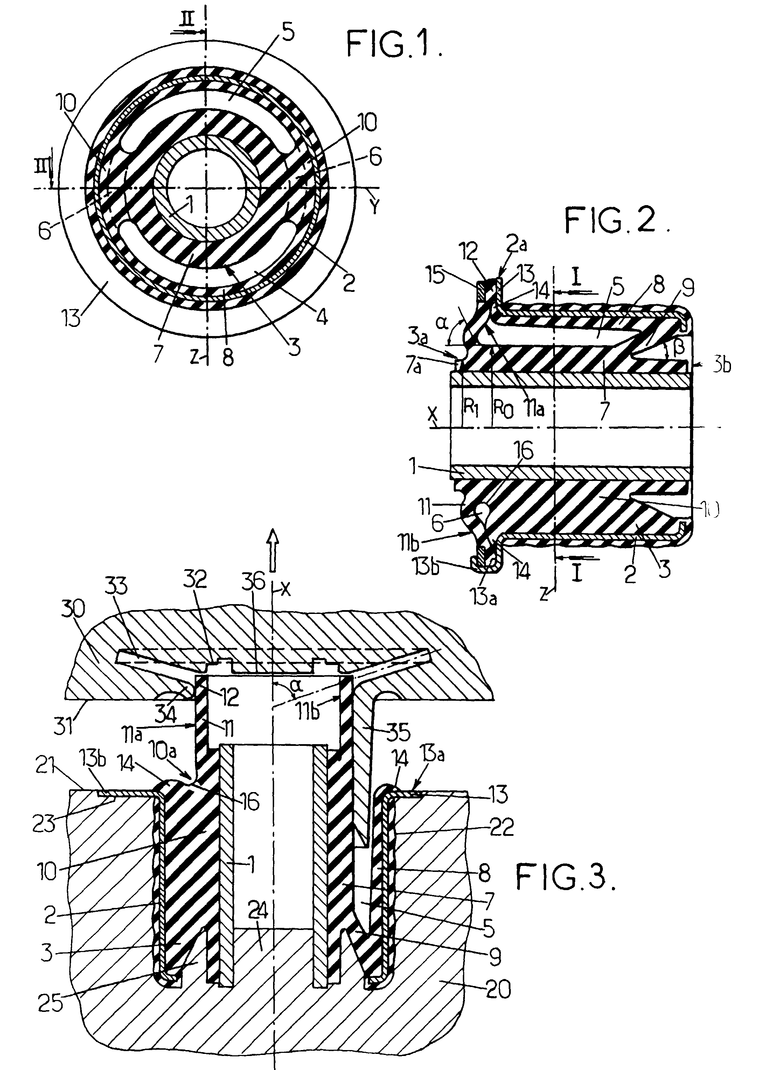

De façon connue en soi, le manchon antivibratoire hydraulique représenté sur les figures 1 et 2 comprend :
- une armature métallique interne tubulaire 1 de préférence à paroi pleine, de révolution autour d'un axe X,
- une armature métallique externe tubulaire 2 de préférence à paroi pleine, de révolution autour de l'axe X, ou de façon plus générale de révolution autour d'un axe parallèle à l'axe X,
- et un corps en élastomère 3 reliant l'une à l'autre les deux armatures 1 et 2 en ménageant entre celles-ci deux poches étanches 4 et 5, diamétralement opposées selon une direction Z perpendiculaire à l'axe X.

Les deux poches étanches 4 et 5 sont reliées l'une à l'autre par deux canaux étroits 6, ou de façon plus générale par au moins un canal étroit 6.

Les deux poches 4 et 5, ainsi que les deux canaux étroits 6, sont remplis d'un liquide qui permet au manchon de remplir sa fonction antivibratoire.

Les deux armatures 1 et 2 sont destinées à être solidarisées avec deux pièces rigides à réunir : par exemple l'armature interne 1 peut être destinée à être solidarisée avec une broche (non représentée) qui la traverse jointivement, alors que l'armature externe 2 peut être destinée à être solidarisée avec un palier (non représenté), cette broche et ce palier étant solidaires respectivement de deux éléments rigides entre lesquels on désir monter le support antivibratoire, ces éléments rigides pouvant être un moteur de véhicule et le châssis de ce véhicule.

Lorsqu'une oscillation de fréquence relativement basse, par exemple de l'ordre de 10 à 50 hertz est imposée selon la direction diamétrale Z à l'une des deux armatures 1 et 2 par rapport à l'autre, le liquide contenu dans le manchon antivibratoire est refoulé alternativement à cette fréquence entre les deux poches 4 et 5, par l'intermédiaire des canaux étroits 6.

Ces mouvements de refoulement de liquide à l'intérieur des canaux étroits 6 provoque un amortissement des oscillations entre les deux armatures 1 et 2, et une atténuation de l'amplitude des oscillations d'une armature à l'autre, en particulier dans une plage de fréquence située au voisinage d'une fréquence donnée qui dépend des dimensions des canaux étroits 6 et qui correspond à un effet de résonnance dans les colonnes de liquide présentes dans ces canaux.

L'invention permet de réaliser un tel manchon antivibratoire hydraulique d'une façon particulièrement simple.

Selon l'invention, le corps en élastomère 3 s'étend axialement entre une première extrémité 3a et une deuxième extrémité 3b. Il comporte une partie annulaire intérieure 7 qui est moulée sur et adhérisée à l'armature intérieure 1, et une partie annulaire extérieure 8 qui est moulée sur et adhérisée à l'armature extérieure 2.

Chaque poche étanche 4, 5 est constituée par un évidement borgne formé à l'intérieur du corps en élastomère 3.

Cet évidement débouche à la première extrémité 3a du corps en élastomère, et il s'étend axialement à l'intérieur du corps en élastomère depuis la première extrémité 3a vers la deuxième extrémité 3b dudit corps en élastomère, jusqu'à une paroi mince 9 appartenant également au corps en élastomère.

Cette paroi mince 9 en élastomère délimite axialement la poche étanche correspondante vers la deuxième extrémité 3b du corps en élastomère, et elle s'étend continûment entre les parties annulaires intérieure 7 et extérieure 8 du corps en élastomère.

Dans l'exemple représenté, chaque paroi mince 9 a sensiblement la forme d'une portion de tronc de cône qui diverge vers la deuxième extrémité 3b du corps en élastomère, avec un demi-angle au sommet pouvant être par exemple compris entre 20 et 60 degrés, avantageusement entre 20 et 30 degrés, de façon à faciliter la déformation de ladite paroi mince lorsque les deux armatures tubulaires 1 et 2 subissent un déplacement relatif selon la direction Z.

Par ailleurs, les parties annulaires intérieure 7 et extérieure 8 du corps en élastomère 3 sont également reliées l'une à l'autre par deux parties pleines 10 opposées et alignées selon une direction diamétrale Y perpendiculaire à la direction Z, ces parties pleines séparant entre elles les deux poches 4 et 5.

De plus, au voisinage de la première extrémité 3a du corps en élastomère, la partie annulaire intérieure 7 dudit corps en élastomère se prolonge périphériquement par une collerette mince en élastomère 11, qui s'étend sensiblement radialement jusqu'à un bord périphérique 12, cette collerette mince 11 présentant une face intérieure 11a en regard des poches étanches 4 et 5, et une face extérieure 11b à l'opposé des poches étanches.

L'armature extérieure 2 comporte, au voisinage de la première extrémité 3a du corps en élastomère, une extrémité axiale 2a qui forme un collet 13 prolongeant périphériquement cette armature 2 vers l'extérieur et présentant une face de contact 13a en regard de la collerette en élastomère 11.

La périphérie de la face intérieure lla de la collerette en élastomère est appliquée de façon étanche contre la face de contact 13a du collet 13, et de préférence également contre une couche 14 d'élastomère qui recouvre au moins partiellement la face de contact 13a du collet. Pour cela, une rondelle rigide 15, notamment métallique, est appliquée à la périphérie de la face extérieure 11b de la collerette et cette rondelle est serrée axialement contre la collerette 11 au moyen de pattes 13b qui prolongent le collet 13 vers l'extérieur et qui sont angulairement réparties autour de ce collet, les pattes 13b étant serties par dessus la rondelle 15.

Au lieu de comporter des pattes 13b, le collet 13 pourrait éventuellement avoir toute sa périphérie rabattue par dessus la rondelle 15.

La collerette mince 11 en élastomère ferme ainsi de façon étanche les deux poches 4 et 5 ainsi que les canaux étroits 6, lesquels sont délimités respectivement d'une part par la collerette 11 en élastomère et d'autre part par une face axiale 10a des parties pleines 10 du corps en élastomère.

La section des canaux étroits 6 est donc déterminée par les formes respectives de la collerette 11 en élastomère et de la face axiale 10a des deux parties pleines 10 du corps en élastomère.

Dans l'exemple représenté sur les dessins, d'une part les faces axiales 10a des parties pleines 10 du corps en élastomère comportent chacune une gorge 16 qui s'étend angulairement entre les deux poches 4 et 5, et d'autre part, la collerette 11 en élastomère comporte une portion radialement intérieure qui présente sensiblement une forme tronconique avec un demi-angle au sommet α qui peut être par exemple voisin de 80 degrés, de façon que la partie radialement intérieure de la collerette 11 s'écarte de la face 10a des parties pleines 10 du corps en élastomère en face de la gorge 16, en formant ainsi les deux canaux étroits 6.

Il a pu être constaté expérimentalement que la précision de la section des canaux étroits 6 ainsi obtenus permet d'obtenir une efficacité satisfaisante du manchon antivibratoire hydraulique.

En variante, les canaux étroits 6 pourraient être formés uniquement par des gorges 16 dans les faces 10a des parties pleines 10 du corps en élastomère, la collerette en élastomère 11 s'étendant purement radialement à partir de son extrémité intérieure.

Selon une autre variante, les faces 10a des parties pleines 10 du corps en élastomère pourraient être sensiblement planes, la section des canaux étroits 6 étant alors déterminée par la forme de la collerette 11.

Selon une variante moins préférée, il serait possible de prévoir un canal étroit 6 unique entre les deux poches 4 et 5, ce canal étroit étant disposé entre la collerette 11 et la face 10a d'une des deux parties pleines 10 du corps en élastomère, la face 10a de l'autre partie pleine 10 du corps en élastomère étant conformée pour s'appliquer de façon sensiblement étanche contre la collerette 11.

Comme représenté sur la figure 3, le corps en élastomère 3 du manchon antivibratoire hydraulique selon l'invention peut être réalisé par moulage, dans un moule constitué par deux parties 20 et 30, mobiles en translation l'une par rapport à l'autre parallèlement à l'axe x.

La première partie de moule 20 comporte une surface de joint 21 généralement plane où débouche une empreinte cylindrique creuse 22, généralement ouverte vers le haut et entourée par un lamage 23.

L'armature extérieure 2 est logée de préférence avec jeu à l'intérieur de l'empreinte 22 pour que ladite armature 2 soit sensiblement noyée dans le corps en élastomère, cette armature étant tenue par son collet 13 qui est logé sans jeu dans le lamage 23, et les pattes 13b du collet 13 étant alors non rabattues.

Par ailleurs, l'armature intérieure 1 est également maintenue à l'intérieur de l'empreinte 22, par exemple au moyen d'un tenon cylindrique 24 qui fait saillie axialement à partir du fond de cette empreinte 22, et qui s'emboîte sans jeu à l'intérieur de l'armature intérieure 1.

Enfin, une couronne 25 fait également saillie axialement à partir du fond de l'empreinte 22, autour du tenon 24, pour donner sa forme à la deuxième extrémité axiale 3b du corps en élastomère.

La deuxième partie de moule 30 comporte une surface de joint 31 parallèle à la surface de joint 21 de la première partie de moule, et une empreinte centrale creuse 32 débouche vers le bas dans cette surface de joint 21 en face de l'empreinte 22 de la première partie de moule.

A partir de cette empreinte centrale 32, un évidement annulaire 33 est creusé dans la deuxième partie de moule 30 sensiblement radialement vers l'extérieur, et plus précisément avec une forme tronconique présentant un demi-angle au sommet α compris entre 70 et 90 degrés, par exemple d'environ 80 degrés, pour former la collerette 11 en élastomère.

Cet évidement annulaire 33 est séparé axialement de la surface de joint 31 par un rebord annulaire 34, qui de préférence ne comporte pas d'arête vive.

La partie radialement intérieure de ce rebord annulaire 34 se prolonge axialement vers l'empreinte creuse 22 par deux doigts axiaux 35 qui pénètrent entre les armatures 1 et 2 lorsque les deux parties de moule 20 et 30 sont rapprochées axialement l'une de l'autre, afin de former les deux poches étanches 4 et 5.

Enfin, la deuxième partie de moule 30 comporte de préférence au fond de son empreinte 32 un tenon 36 propre à s'emboîter sensiblement sans jeu à l'intérieur de l'armature intérieure 1.

Pour former le corps en élastomère 3, on rapproche axialement l'une de l'autre les deux parties de moule 20 et 30 jusqu'à ce que leurs surfaces de joint 21 et 31 soit en contact, puis on injecte entre les armatures 1 et 2 un élastomère à l'état fluide, par un orifice d'injection (non représenté).

Cet élastomère pénètre dans l'ensemble des empreintes creuses des deux parties de moule 20 et 30, après quoi il subit une vulcanisation.

Au cours de cette vulcanisation, l'élastomère est également adhérisé sur les armatures 1 et 2 qui ont préalablement subi un traitement de surface chimique à cet effet.

Après vulcanisation et adhérisation du corps en élastomère 3, les deux parties de moule 20 et 30 sont écartées axialement l'une de l'autre pour démouler le corps en élastomère 3.

Au cours de ce démoulage, la collerette 11 en élastomère, qui a été moulée en contre-dépouille dans l'évidement annulaire 33 de la deuxième partie de moule 30, est rabattue en jupe sensiblement parallèlement à l'axe X pour permettre le passage du rebord annulaire 34 et des doigts axiaux 35, après quoi elle reprend sa forme tronconique.

Pour permettre ce rabattement, la face intérieure lla de la collerette présente de préférence un rayon intérieur R0, correspondant au rayon de la partie annulaire intérieure 7 du corps en élastomère en regard des poches étanches 4 et 5, qui est supérieur au rayon intérieur R1 de la face extérieure 11b de cette collerette, le rayon R1 correspondant au rayon extérieur d'une portion 7a saillante de la partie annulaire intérieure 7 du corps en élastomère au niveau de la première extrémité 3a dudit corps en élastomère.

De préférence, la différence entre les rayons R0 et R1 est sensiblement égale au moins à l'épaisseur de la collerette 11 en élastomère, ou à tout le moins à la moitié de cette épaisseur.

Ainsi, la partie radialement intérieure de la collerette en élastomère n'est pas trop comprimée et ne tend pas à être arrachée par le rebord annulaire 34 et les doigts axiaux 35 lors du démoulage.

Eventuellement, la portion 7a de la partie intérieure 7 du corps en élastomère pourrait être supprimée, auquel cas le rayon R1 serait égal au rayon extérieur de l'armature intérieure 1, que cette armature intérieure soit saillante ou non par rapport à la première extrémité axiale 3a du corps en élastomère.

Après démoulage, la collerette 11 en élastomère est rabattue contre le collet 13 de l'armature extérieure 2, et elle est fixée à ce collet au moyen de la rondelle 15 et des pattes 13b, sans dilater radialement le bord périphérique 12 de la collerette afin d'éviter de créer des contraintes de traction dans cette collerette.

La forme sensiblement tronconique de la portion radialement intérieure de la collerette 11 est déterminée par la forme initiale tronconique de ladite collerette.

Après rabattement contre le collet 13, la collerette 11 forme en outre un pli annulaire formant soufflet qui peut faciliter la déformation de la collerette 11 en regard des poches 4 et 5 lors des mouvements relatifs des armatures 1 et 2 selon la direction Z.

## Revendications

1. Manchon antivibratoire hydraulique comportant deux armatures rigides (1, 2) tubulaires s'entourant l'une l'autre, savoir une armature intérieure (1) et une armature extérieure (2) qui présentent des axes longitudinaux parallèles à une même direction axiale (X) et qui sont reliées entre elles par un corps en élastomère (3), ce manchon antivibratoire comportant au moins deux poches étanches (4, 5) délimitées entièrement par le corps en élastomère et les deux armatures, ces poches étanches étant disposées entre les deux armatures et communiquant entre elles par au moins un canal étroit (6), l'ensemble des deux poches et du canal étroit étant rempli par un liquide, le corps en élastomère (3) s'étendant axialement entre des première et deuxième extrémités (3a, 3b), le corps en élastomère comportant une partie annulaire intérieure (7) qui est moulée sur et adhérisée à l'armature intérieure (1) et une partie annulaire extérieure (8) qui est en contact avec l'armature extérieure (2), et le corps en élastomère comportant en outre au moins deux parties pleines (10) qui séparent les poches (4, 5) angulairement les unes des autres, **caractérisé en ce que :**
- la partie annulaire extérieure (8) du corps en élastomère est moulée sur l'armature extérieure (2) et adhérisée à cette armature, chaque poche étanche (4, 5) étant constituée par un évidement borgne formé à l'intérieur du corps en élastomère, qui débouche à la première extrémité (3a) de ce corps en élastomère et qui s'étend axialement à l'intérieur du corps en élastomère depuis cette première extrémité vers la deuxième extrémité (3b) dudit corps en élastomère, cet évidement étant délimité axialement vers la deuxième extrémité (3b) du corps en élastomère par une paroi (9) mince qui appartient audit corps en élastomère et qui s'étend continûment entre les parties annulaires intérieure et extérieure (7, 8) de ce corps en élastomère,
- la partie annulaire intérieure (7) du corps en élastomère se prolonge périphériquement au voisinage de la première extrémité (3a) dudit corps en élastomère par une collerette mince (11) en élastomère qui s'étend sensiblement radialement jusqu'à un bord périphérique et qui présente une face intérieure (11a) en regard des poches étanches et une face extérieure (11b) à l'opposé des poches étanches,
- l'armature extérieure (2) du corps en élastomère comporte, au voisinage de la première extrémité (3a) du corps en élastomère, une extrémité axiale (2a) formant un collet (13) qui prolonge périphériquement cette armature vers l'extérieur et qui présente une face de contact (13a) en regard de la collerette en élastomère,
- et la face intérieure (11a) de la collerette en élastomère est solidarisée périphériquement de façon étanche, au niveau du bord périphérique de cette collerette, avec la face de contact (13a) du collet de l'armature extérieure en fermant ainsi de façon étanche les deux poches (4, 5) et le canal étroit (6), lequel est délimité d'une part par la collerette en élastomère et d'autre part par une des parties pleines du corps en élastomère qui séparent angulairement les poches (4, 5).

2. Manchon antivibratoire hydraulique selon la revendication 1, dans lequel le bord périphérique (12) de la collerette en élastomère est serré axialement entre la face de contact (13a) du collet de l'armature extérieure et une rondelle rigide (15), le collet de l'armature extérieure présentant des portions (13b) rabattues par dessus la rondelle rigide pour sertir cette rondelle.

3. Manchon antivibratoire hydraulique selon l'une quelconque des revendications 1 et 2, dans lequel la face intérieure (11a) de la collerette en élastomère s'étend sensiblement radialement vers l'extérieur à partir d'une zone circulaire qui présente un rayon R0 et la face extérieure (11b) de la collerette en élastomère s'étend sensiblement radialement vers l'extérieur à partir d'une zone circulaire qui présente un rayon R1 inférieur au rayon R0.

4. Manchon antivibratoire hydraulique selon la revendication 3, dans lequel la collerette en élastomère présente une épaisseur au plus égale à la différence R0-R1.

5. Manchon antivibratoire hydraulique selon l'une quelconque des revendications précédentes, dans lequel la collerette (11) en élastomère présente une portion radialement intérieure formant sensiblement un tronc de cône qui diverge vers la première extrémité (3a) du corps en élastomère et qui présente un demi-angle au sommet (α) compris entre 70 et 90 degrés.

6. Manchon antivibratoire hydraulique selon l'une quelconque des revendications précédentes, dans lequel le bord périphérique (12) de la collerette en élastomère n'est pas dilaté radialement.

7. Manchon antivibratoire hydraulique selon l'une quelconque des revendications précédentes, dans lequel chaque paroi mince (9) du corps en élastomère, qui délimite axialement une poche étanche vers la deuxième extrémité (3b) dudit corps en élastomère, présente sensiblement la forme d'une portion de tronc de cône qui diverge vers la deuxième extrémité (3b) du corps en élastomère.

8. Procédé de fabrication d'un manchon antivibratoire hydraulique selon l'une quelconque des revendications précédentes, caractérisé en ce qu'il comporte une étape de moulage du corps en élastomère (3) sur les deux armatures tubulaires (1, 2) au moyen d'un moule constitué par deux parties (20, 30) déplaçables en translation l'une par rapport à l'autre parallèlement à la direction axiale (X), dites respectivement première et deuxième parties, la première partie de moule (20) présentant une surface de joint (21) où débouche une empreinte (22) cylindrique creuse qui reçoit au moins l'armature extérieure (2), la deuxième partie de moule (30) présentant également une surface de joint (31) disposée en regard de la surface de joint de la première partie de moule, une empreinte centrale (32) creuse débouchant axialement dans la surface de joint (31) de la deuxième partie de moule en regard de l'empreinte (22) de la première partie de moule, un évidement annulaire (33) étant creusé sensiblement radialement vers l'extérieur à partir de l'empreinte centrale (32) de la deuxième partie de moule pour former en contre-dépouille la collerette (11) en élastomère, et la deuxième partie de moule comportant en outre au moins deux doigts (35) qui saillent axialement vers l'empreinte (22) de la première partie de moule et qui pénètrent dans cette empreinte lorsque les deux parties de moule (20, 30) sont rapprochées l'une de l'autre, ces deux doigts (35) étant alors disposés entre les armatures intérieure et extérieure (1, 2) pour former les poches étanches (4, 5) du corps en élastomère.

9. Procédé selon la revendication 8, dans lequel l'évidement annulaire (33) qui forme la collerette (11) en élastomère présente dans sa totalité une forme de tronc de cône qui diverge en s'éloignant de la première partie de moule (20) et qui présente un demi-angle au sommet (α) compris entre 70 et 90 degrés.

10. Procédé selon l'une quelconque des revendications 8 et 9, comportant en outre une étape consistant à rabattre la collerette (11) en élastomère contre la face de contact (13a) du collet de l'armature extérieure puis à solidariser périphériquement de façon étanche le collet (13) avec la collerette en élastomère (11), sans dilater radialement le bord périphérique (12) de cette collerette.

## Patentansprüche

1. Vibrationsdämpfende hydraulische Stütze, enthaltend zwei starre, röhrenförmige Hülsen (1, 2), von denen die eine die andere umgibt, wobei es sich im einzelnen um eine innere Hülse (1) und eine äußere Hülse (2) mit zur selben Achsrichtung (X) parallel verlaufenden Längsachsen handelt, die miteinander durch einen Elastomerkörper (3) verbunden sind, wobei diese vibrationsdämpfende Stütze wenigstens zwei abgedichtete Hohlräume (4, 5) umfaßt, die vollständig vom Elastomerkörper und den beiden Hülsen begrenzt werden, wobei diese abgedichteten Hohlräume zwischen den beiden Hülsen angeordnet und miteinander über wenigstens einen engen Durchlaß (6) verbunden sind und wobei die von den zwei Hohlräumen und dem engen Durchlaß gebildete Anordnung mit einer Flüssigkeit gefüllt ist, und der Elastomerkörper (3) sich axial zwischen einem ersten und einem zweiten Ende (3a, 3b) erstreckt und einen auf der inneren Hülse (1) ausgeformten und daran anhaftenden ringförmigen Innenbereich (7) und einen mit der äußeren Hülse (2) in Kontakt stehenden ringförmigen Außenbereich (8) aufweist und wobei der Elastomerkörper außerdem wenigstens zwei ebene Abschnitte (10) umfaßt, die die Hohlräume (4, 5) winklig voneinander trennen, dadurch gekennzeichnet,
- daß der ringförmige Außenbereich (8) des Elastomerkörpers auf der äußeren Hülse (2) ausgeformt ist und an dieser Hülse anhaftet, wobei jeder abgedichtete Hohlraum (4, 5) aus einer im Inneren des Elastomerkörpers ausgebildeten Scheinaussparung besteht, welche am ersten Ende (3a) des Elastomerkörpers ausmündet und sich axial vom ersten Ende zum zweiten Ende (3b) des Elastomerkörpers zum Inneren des Elastomerkörpers hin erstreckt, wobei diese Aussparung in Achsrichtung zum zweiten Ende (3b) des Elastomerkörpers hin von einer dünnen Wand (9) begrenzt wird, die zum Elastomerkörper gehört und durchgehend zwischen dem ringförmigen Innen- und dem ringförmigen Außenbereich (7, 8) dieses Elastomerkörpers verläuft,
- daß der ringförmige Innenbereich (7) des Elastomerkörpers am Rand nahe dem ersten Ende (3a) des Elastomerkörpers durch eine dünne Elastomerauskragung (11) verlängert wird, die sich im wesentlichen radial bis zu einer Randkante erstreckt und eine den abgedichteten Hohlräumen zugewandte Innenseite (11a) sowie eine den abgedichteten Hohlräumen gegenüberliegende Außenseite (11b) umfaßt,
- daß die äußere Hülse (2) des Elastomerkörpers nahe dem ersten Ende (3a) des Elastomerkörpers ein axiales Ende (2a) aufweist, welches einen Flansch (13) bildet, der diese Hülse am Rand nach außen hin verlängert und eine Kontaktseite (13a) zur Elastomerauskragung hin aufweist,
- und daB die Innenseite (lla) der Elastomerauskragung am Rand auf Höhe ihrer Randkante in abgedichteter Weise an der Kontaktseite (13a) des Flansches der äußeren Hülse befestigt ist und dabei die beiden Hohlräume (4, 5) und den engen Durchgang (6) dicht verschließt, wobei der Durchgang einerseits durch die Elastomerauskragung und andererseits durch einen der ebenen, die Hohlräume (4, 5) winklig voneinander trennenden Abschnitte des Elastomerkörpers begrenzt wird.

2. Vibrationsdämpfende hydraulische Stütze nach Anspruch 1, bei der die Außenkante (12) der Elastomerauskragung axial zwischen der Kontaktseite (13a) des Flansches der äußeren Hülse und einer starren Scheibe (15) eingeklemmt ist, wobei der Flansch der äußeren Hülse Bereiche (13b) aufweist, welche über die starre Scheibe geklappt sind und diese Scheibe dadurch einfassen.

3. Vibrationsdämpfende hydraulische Stütze nach einem der Ansprüche 1 und 2, wobei die Innenseite (lla) der Elastomerauskragung sich von einem kreisförmigen Bereich, der einen Radius R0 aufweist, im wesentlichen radial nach außen erstreckt, während sich die Außenseite (11b) der Elastomerauskragung von einem kreisförmigen Bereich mit einem Radius R1, der kleiner ist als der Radius R0, im wesentlichen radial nach außen erstreckt.

4. Vibrationsdämpfende hydraulische Stütze nach Anspruch 3, bei der die Elastomerauskragung eine Dicke aufweist, die wenigstens der Differenz R0 - R1 entspricht.

5. Vibrationsdämpfende hydraulische Stütze nach einem der vorangegangenen Ansprüche, bei der die Elastomerauskragung (11) einen Bereich umfaßt, der sich radial nach innen erstreckt und im wesentlichen die Form eines zum ersten Ende (3a) des Elastomerkörpers divergierenden Kegelstumpfes aufweist, dessen halber Kegelwinkel (a) zwischen 70 und 90° beträgt.

6. Vibrationsdämpfende hydraulische Stütze nach einem der vorangegangenen Ansprüche, bei der die Außenkante (12) der Elastomerauskragung nicht radial aufgedehnt ist.

7. Vibrationsdämpfende hydraulische Stütze nach einem der vorangegangenen Ansprüche, bei der jede dünne Wand (9) des Elastomerkörpers, welche axial einen abgedichteten Hohlraum zum zweiten Ende (3b) des Elastomerkörpers hin begrenzt, im wesentlichen die Form eine Kegelstumpfbereichs besitzt, der zum zweiten Ende (3b) des Elastomerkörpers hin divergiert.

8. Verfahren zur Herstellung einer vibrationsdämpfenden hydraulischen Stütze nach einem der vorangegangenen Ansprüche, dadurch gekennzeichnet, daß das Verfahren einen Arbeitsschritt umfaßt, bei dem der Elastomerkörper (3) auf den beiden röhrenförmigen Hülsen (1, 2) mit Hilfe einer Form ausgebildet wird, welche aus zwei Teilen (20, 30) besteht, die zueinander parallel in Richtung der Achse (X) verschiebbar sind und die als erster bzw. zweiter Teil bezeichnet werden, wobei der erste Teil (20) der Form eine Verbindungsfläche (21) aufweist, an der eine zylindrische hohle Vertiefung (22) ausmündet, welche wenigstens die äußere Hülse (2) aufnimmt, und der zweite Teil (30) der Form ebenfalls eine Verbindungsfläche (31) aufweist, die zur Verbindungsfläche des ersten Teils der Form ausgerichtet ist, wobei eine mittige hohle Vertiefung (32) in der Verbindungsfläche (31) des zweiten Teils der Form axial zur Vertiefung (22) des ersten Teils der Form ausmündet, eine ringförmige hohle Aussparung (33) von der mittigen Vertiefung (32) des zweiten Teils der Form im wesentlichen radial nach außen verläuft und zur Herstellung der Elastomerauskragung (11) als Formschräge dient, und wobei der zweite Teil der Form unter anderem wenigstens zwei Zapfen (35) enthält, welche axial zur Vertiefung (22) des ersten Teils der Form vorstehen und in diese Vertiefung eindringen, wenn die beiden Teile (20, 30) der Form zusammengefügt werden, wobei diese beiden Zapfen (35) dann zum Ausformen der Hohlräume (4, 5) des Elastomerkörpers zwischen der äußeren und der inneren Hülse (1, 2) zu liegen kommen.

9. Verfahren nach Anspruch 8, wobei die zur Ausformung der Elastomerauskragung (11) dienende ringförmige Aussparung (33) insgesamt als Kegelstumpf ausgebildet ist, der sich vom ersten Teil (20) der Form aus erstreckt, dabei divergiert und einen halben Kegelwinkel (a) von zwischen 70 und 90° aufweist.

10. Verfahren nach einem der Ansprüche 8 und 9, enthaltend unter anderem einen Arbeitsschritt, der darin besteht, die Elastomerauskragung (11) gegen die Kontaktseite (13a) des Flansches der äußeren Hülse umzuschlagen und den Flansch (13) sodann am Rand in abgedichteter Weise mit der Elastomerauskragung (11) zu verbinden, ohne dabei die Randkante (12) dieser Auskragung aufzuweiten.

## Claims

1. A hydraulic antivibration sleeve comprising two tubular rigid strength members (1, 2) one surrounding the other, namely an inner strength member (1) and an outer strength member (2) having respective longitudinal axes parallel to a common axial direction (X) and interconnected by an elastomer body (3), the antivibration sleeve including at least two sealed pockets (4, 5) fully defined by the elastomer body and the two strength members, said sealed pockets being disposed between the two strength members and communicating with each other via at least one narrow channel (6), the two pockets and the narrow channel together being filled with a liquid, the elastomer body (3) extending axially between first and second ends (3a, 3b), the elastomer body including an inner annular portion (7) molded on and bonded to the inner strength member (1) and an outer annular portion (8) in contact with the outer strength member (2), and the elastomer body further including at least two solid portions (10) angularly separating the pockets (4, 5) from one another, the sleeve being characterized in that:
^{•} the outer annular portion (8) of the elastomer body is molded on the outer strength member (2) and is bonded to said member, each sealed pocket (4, 5) being constituted by a blind hole formed inside the elastomer body, opening out at the first end (3a) of the elastomer body and extending axially inside the elastomer body from said first end towards the second end (3b) of said elastomer body, the hole being limited axially towards the second end (3b) of the elastomer body by a thin wall (9) belonging to said elastomer body and extending continuously between the inner and outer annular portions (7, 8) of the elastomer body;
^{•} the inner annular portion (7) of the elastomer body is extended peripherally in the vicinity of the first end (3a) of said elastomer body by a thin elastomer collar (11) which extends substantially radially from a peripheral edge and which presents an inside face (11a) facing the sealed pockets and an outside face (11b) facing away from the sealed pocket;
^{•} the outer strength member (2) of the sleeve includes, in the vicinity of the first end (3a) of the elastomer body, an axial end (2a) that forms a flange (13) extending said strength member peripherally outwards and having a contact face (13a) facing the elastomer collar; and
^{•} the inside face (11a) of the elastomer collar is peripherally secured in sealed manner via the peripheral edge of the collar to the contact face (13a) of the flange of the outer strength member, thereby closing in sealed manner the two pockets (4, 5) and the narrow channel (6), which channel is defined firstly by the elastomer collar and secondly by one of the solid portions of the elastomer body angularly separating the pockets (4, 5).

2. A hydraulic antivibration sleeve according to claim 1, in which the peripheral edge (12) of the elastomer collar is clamped axially between a rigid washer (15) and the contact face (13a) of the flange of the outer strength member, the flange of the outer strength member having portions (13b) which are folded over the rigid washer to crimp said washer in place.

3. A hydraulic antivibration sleeve according to claim 1 or 2, in which the inside face (11a) of the elastomer collar extends substantially radially outwards from a circular zone having a radius R0, and the outside face (11b) of the elastomer collar extends substantially radially outwards from a circular zone having a radius R1 that is smaller than the radius R0.

4. A hydraulic antivibration sleeve according to claim 3, in which the elastomer collar has a thickness that is not greater than the difference R0 - R1.

5. A hydraulic antivibration sleeve according to any preceding claim, in which the elastomer collar (11) has a radially inner portion substantially forming a truncated cone that flares towards the second end (3a) of the elastomer body and that has a half-angle at the apex (a) lying in the range 70° to 90°.

6. A hydraulic antivibration sleeve according to any preceding claim, in which the peripheral edge (12) of the elastomer collar is not expanded radially.

7. A hydraulic antivibration sleeve according to any preceding claim, in which each thin wall (9) of the elastomer body axially limiting a sealed pocket towards the second end (3b) of the elastomer body is substantially in the form of a portion of a truncated cone flaring towards the second end (3b) of the elastomer body.

8. A method of manufacturing a hydraulic antivibration sleeve according to any preceding claim, characterized in that it comprises a step of molding the elastomer body (3) on the two tubular strength members (1, 2) by means of a mold made up of two portions (20, 30) displaceable in translation relative to each other parallel to the axial direction (X), said portions being referred to respectively as a first portion and a second portion, the first mold portion (20) having a join surface (21) into which there opens out a cylindrical mold cavity (22) which receives at least the outer strength member (2), the second mold portion (30) likewise having a join surface (31) disposed facing the join surface of the first mold portion, with a central mold cavity (32) opening out axially into the join surface (31) of the second mold portion facing the mold cavity (22) of the first mold portion, an annular hollow (33) being formed substantially radially outwardly from the central mold cavity (32) of the second mold cavity to form the elastomer collar (11) in an undercut, and the second mold portion further including at least two fingers projecting axially towards the cavity (22) of the first mold portion and penetrating into said cavity when the two mold portions (20, 30) are moved towards each other, the two fingers (35) then being disposed between the inner and outer strength members (1, 2) to form the sealed pockets (4, 5) of the elastomer body.

9. A method according to claim 8, in which the annular hollow (33) that forms the elastomer collar (11) is entirely in the form of a truncated cone flaring away from the first mold portion (20) and having a half-angle at the apex (a) lying in the range 70° to 90°.

10. A method according to claim 8 or 9, further including a step consisting in folding the elastomer collar (11) down against the contact face (13a) of the flange of the outer strength member, and then in securing the flange (13) peripherally in sealed manner to the elastomer collar (11), without radially expanding the peripheral edge (12) of said collar.
